# EUROPÄISCHE PATENTSCHRIFT

(11) **EP 3 527 081 B1**
(45) Veröffentlichungstag und Bekanntmachung des Hinweises auf die Patenterteilung: **28.09.2022**
(21) Anmeldenummer: 18156940.1
(22) Anmeldetag: 15.02.2018
(51) Int. Cl.: A22C 5/00, A22C 7/00, A22C 9/00, A22C 11/00, A22C 11/02, A22C 15/00, A22C 17/00, A22C 18/00

(54) **VORRICHTUNG UND VERFAHREN ZUR PRODUKTION VON NAHRUNGSMITTELN**
METHOD AND DEVICE FOR PRODUCING FOOD
DISPOSITIF ET PROCÉDÉ DE FABRICATION DE DENRÉES ALIMENTAIRES

(43) Veröffentlichungstag der Anmeldung: 21.08.2019
(73) Patentinhaber: Albert Handtmann Maschinenfabrik GmbH & Co. KG, 88400 Biberach (DE)
(72) Erfinder: STROHM, Kurt, 88448 Attenweiler (DE); BETTINGER, Daniel, 88437 Maselheim (DE); SCHRADER, Wolfgang, 88400 Biberach (DE)
(74) Vertreter: Grünecker Patent- und Rechtsanwälte PartG mbB

(56) Entgegenhaltungen:
- EP-A2- 3 208 905
- CN-A- 102 136 736
- CN-U- 206 757 023
- JP-B2- 6 251 221
- US-A1- 2016 134 102
- US-B1- 6 245 063

## Beschreibung

Die Erfindung betrifft eine Vorrichtung und ein Verfahren zur Produktion von Nahrungsmitteln aus pastösen oder flüssigen Massen, insbesondere eine Füllmaschine zur Wurstherstellung Maschinen und Anlagen in der Nahrungsmittelproduktion, insbesondere Füllmaschinen, wie beispielsweise Vakuumfüllmaschinen, Abdrehlinien, Clipper etc., verwenden häufig Schaltnetzteile und elektronisch kommutierte Antriebe. Um die gesetzlichen Anforderungen an die elektromagnetische Verträglichkeit (EMV) zu erreichen, sind Filtermaßnahmen gegen elektrische Störungen nötig. Durch diese EMV-Filter entstehen Ableitströme, die Fehlerstromschutzschalter (RCD) - insbesondere, wenn diese zum Personenschutz dienen - auslösen können. Damit ist ein Betrieb an Steckdosen mit einem Fehlerstromschutzschalter für Personenschutz nicht möglich. Mit einem Fehlerstromschutzschalter mit höheren Auslöseschwellen sind aber die Maschinen und Gebäude nur gegen Brand geschützt. Die Maschinen und Anlagen werden daher oftmals entweder fest ans Netz angeschlossen, mit einem Trenntransformator ausgerüstet oder an speziellen Steckdosen ohne Schutzschalter betrieben. Eine weitere Möglichkeit besteht darin, die Ableitströme - womöglich - auf den Nullleiter zu führen. Der Personenschutz wird über die Schutzleiter (PE) erreicht.

Die zuvor genannten Maßnahmen weisen jedoch wesentliche Nachteile auf.

Besonders bei der Nahrungsmittelproduktion werden kompakte und mobile Maschinen benötigt, die sich flexibel einsetzen lassen. Dazu gehört z. B., dass sich die Maschinen zur Reinigung aus den Produktionsräumen leicht an einen anderen Ort bringen lassen. Insbesondere bei Fülllinien werden Vorsatzgeräte, wie beispielsweise Abdrehlinie, Clipper, Aufhängeeinrichtung, etc., häufig flexibel eingesetzt, sodass die einzelnen Maschinen zur Herstellung bewegbar sein müssen. Das ist mit fest angeschlossenen Maschinen nicht möglich.

Maschinen mit eingebautem Trenntransformator werden größer und schwerer, was die Beweglichkeit ebenfalls behindert - genau wie Trenntransformatoren, die in externe Gehäuse montiert sind, und der Maschine vorgeschaltet werden können. Durch die Trenntransformationen bleiben die Ableitströme und somit auch der Isolationsfehlerstrom auf der Sekundärseite des Trafos. Die Erkennung, ob ein Ausgleichsstrom fließt, kann aber vom Fehlerstromschutzschalter nur auf der Primärseite des Trafos gemessen und erkannt werden. Somit ist kein Schutz durch den Fehlerstromschutzschalter gewährleistet. Besonders in Feuchträumen ist dieser Schutz aber dringend erwünscht. Auch die Anbringung und Kennzeichnung von speziellen Steckdosen, die nicht mit Fehlerstromschutzschaltern abgesichert sind, erhöhen den Aufwand und reduziert die Flexibilität und auch die Sicherheit.

Sollen die Filterströme über den Nullleiter abgeleitet werden, sind spezielle Filter und Umrichter nötig. Die Ableitströme der Kabelschirme fließen nach wie vor über den Schutzleiter ab, weil die Schirme mit dem Nullleiter verbunden werden können. Ein getrennter Nullleiter ist nicht bei allen Netzformen vorhanden und damit ist diese Lösung nicht weltweit einsetzbar. Des Weiteren können mit einer umfangreicheren EMV-Filterung (größere und überdimensionierte Filter) die Hochfrequenzenableitströme reduziert werden. So können etwa wirksamere EMV-Eingangsfilter in Kombination mit zusätzlichen Ausgangsfiltern eingesetzt werden, was allerdings mit höheren Kosten verbunden ist. Ein weiterer Nachteil dieser Maßnahme gegen Ableitströme ist das Platzproblem, das vor allem bei der Nachrüstung mit größeren und zusätzlichen Filtern auftritt.

Der Einsatz von Fehlerstromschutzschaltern mit hoher Auslöseschwelle ist ebenfalls denkbar, jedoch mit erheblichen Risiken verbunden, da durch die höheren Ableitströme Potenzialverschiebungen auftreten und die zulässige Berührungsspannung von maximal 50 VAC überschritten werden kann. Außerdem sind Schäden an den einzelnen Komponenten des Systems möglich.

Der Stand der Technik beschreibt mehrere Verfahren zum Kompensieren von Ableitströmen, beispielsweise in photovoltaischen Systemen (US 2016/134102 A1) oder im Bereich der Medizintechnik (US 6 245 063 B1) oder Niederspannungssystemen (EP 3 208 905 A2). Die CN 102 136 736 A betrifft das Eliminieren von Leckströmen in einem photovoltaischen System und die JP 6 251221 B2 beschreibt einen Rauschfilter für ein elektrisches Hochleistungsgerät. Die CN 206 757 023 U beschreibt ein Kompensationssystem für Leckströme.

Hiervon ausgehend liegt der vorliegenden Erfindung die Aufgabe zugrunde, eine verbesserte Vorrichtung und ein verbessertes Verfahren zur Nahrungsmittelherstellung bereitzustellen, die flexibel einsetzbar sind und gleichzeitig sicher betrieben werden können.

Erfindungsgemäß wird diese Aufgabe durch die Merkmale der Ansprüche 1 und 8 gelöst. Die Vorrichtung zur Produktion von Nahrungsmitteln ist, insbesondere eine Füllmaschine zur Wurstherstellung mit einem Laststromkreis, der einen Ableitstrom erzeugt. Die Vorrichtung weist einen Motor auf, um beispielsweise das Förderwerk einer Füllmaschine anzutreiben. Um die gesetzlichen Anforderungen an die elektromagnetische Verträglichkeit zu erreichen, sind Filtermaßnahmen gegen elektrische Störungen notwendig. Dabei weist die Vorrichtung insbesondere auch einen Frequenzumrichter auf. Durch diesen mindestens einen Filter und ein Kabel zum Motor können Ableitströme entstehen, die einen Fehlerstromschutzschalter auslösen könnten. Aus diesem Grunde ist gemäß der vorliegenden Erfindung ein Ableitstromkompensator vorgesehen mit einer Einrichtung zum Erfassen eines Ableitstroms sowie eine Einrichtung zum Erzeugen eines Kompensationsstroms, der dem Ableitstrom entgegen gerichtet ist und mit dem Ableitstrom überlagert wird, derart, dass der Ableitstrom reduziert, insbesondere im Wesentlichen eliminiert wird. Dabei wird der Ableitstrom zumindest so stark reduziert, dass er unterhalb der Schwelle zum Auslösen eines RCD-Schutzschalters ist. Vorzugsweise wird der Ableitstrom vollständig eliminiert.

Dies bringt den Vorteil mit sich, dass sich die Ströme ausgleichen und der Fehlerstromschutzschalter nicht mehr wegen erhöhten Ableitströmen auslöst. Lediglich Isolationsfehler oder gefährliche Körperströme können erkannt werden und führen zur Auslösung. Dabei sollte z. B. ein Frequenzbereich von 100 Hz bis 300 kHz abgedeckt werden. Der Frequenzbereich 50-60 Hz darf nicht kompensiert werden, damit der Personenschutz wirksam bleibt. Die Erfindung bringt den Vorteil mit sich, dass ein voller Personenschutz gewährleistet wird, und die Vorrichtung dennoch bewegt werden kann, da diese nicht fest installiert werden muss und kein großer schwerer Trenntransformator integriert werden muss. Dies bringt unter anderen auch eine bessere Hygiene durch eine vereinfachte Reinigung der Maschine mit sich und eine große Flexibilität im Hinblick auf die Zusammensetzung von einzelnen Maschine einer Fülllinie. Der Ableitstromkompensator ist kostengünstig und kann auf einfache Art und Weise auch in bestehende Maschine nachgerüstet werden. Im Vergleich zu Trenntransformatoren ergibt sich eine hohe Energieeffizienz. Gemäß der vorliegenden Erfindung ist ein weiter Spannungsbereich abdeckbar, derart, dass die Vorrichtung weltweit einsetzbar ist. Isolationsfehler oder Geräteschluss werden mit vorgeschalteten Fehlerstromschutzschaltern zu 100 % erkannt. Gemäß der vorliegenden Erfindung können Ströme bis zu 1 A kompensiert werden.

Der Kompensationsstrom kann in seiner Phase zum Ableitstrom um 180° verschoben sein und im Wesentlichen die gleiche Amplitude aufweisen. Somit kann der Ableitstrom komplett kompensiert werden. Da es ausreichend ist, wenn der Ableitstrom unterhalb der Schwelle zur Auslösung des RCD-Schutzschalters ist, kann der Ableitstrom z.B. ca. 40% der Schaltschwelle des RCD-Schutzschalters betragen. Wesentlich dabei ist, dass der Ableitstrom z. B. kleiner als die Auslöseschwelle ist.

Die Einrichtung zum Erzeugen eines Kompensationsstroms weist vorteilhafterweise einen Verstärker auf, sowie ein Kondensatornetzwerk (als Filterkondensatoren), über das Kompensationsstrom einzelnen Phasen eines Mehrphasensystems, insbesondere mindestens einer der drei Phasen, vorzugsweise allen drei Phasen eines Dreiphasensystems zugeführt werden kann. Dabei kann beispielsweise der Strom in allen drei Phasen erfasst werden und durch Differenzbildung der Ableitstrom jeder Phase bestimmt werden und im Hinblick auf eine symmetrische Lastverteilung ein jeweiliger Kompensationsstrom auf die entsprechenden Phasen geleitet wird.

Vorteilhafterweise wird der vom Verstärker erzeugte Kompensationsstrom derart auf die drei Phasen aufgeteilt, dass in Summe der Ableitstrom kompensiert bzw. ausreichend reduziert wird.

Bevorzugterweise befindet sich der Ableitstromkompensator zwischen einem Fehlerstromschutzschalter (RCD) und dem EMV-Filter, d. h. dem EMV-Eingangsfilter. Somit können die durch den Filter erzeugten Ableitströme kompensiert werden, jedoch auch weitere im Laststromkreis durch parasitäre Kopplung erzeugte Ableitströme, insbesondere bedingt durch lange Motorleitungen und/oder einem Frequenzumrichter.

Erfindungsgemäß ist der Ableitstromkompensator in einem der Vorrichtung vorgeschalteten Gerät eingebaut. Insbesondere weist die Vorrichtung einen Stecker auf, der über eine Steckdose, insbesondere Industriesteckdose, mit dem Ableitstromkompensator verbindbar ist. Die Vorrichtung umfasst also dann dieses Gerät, das wiederum mit einem Stecker, insbesondere Industriestecker, über eine Steckdose, insbesondere Industriesteckdose, mit dem Netz verbunden werden kann. Dies bringt den Vorteil mit sich, dass die Vorrichtungen flexibel an unterschiedlichen Stellen eingesteckt werden können und ein entsprechendes Gerät einfach nachgerüstet werden kann. Ein entsprechendes vorgeschaltetes Gerät könnte dann auch für verschiedene Vorrichtungen verwendet werden. Es ist aber auch möglich, dass die Vorrichtung fest über ein Kabel mit dem vorgeschalteten Gerät verbunden ist, und dann über einen Stecker mit einer Steckdose, insbesondere Industriesteckdose, verbindbar ist.

Die Spannungsversorgung des Ableitstromkompensators, insbesondere des Verstärkers, erfolgt über die Spannungsversorgung der Vorrichtung, d.h. über die Netzspannung. Wenn beispielsweise der Ableitstromkompensator in dem vorgeschalteten Gerät eingebaut ist, kann es zu dem Problem kommen, dass beim Einstecken dieses Geräts in die Industriesteckdose der Fehlerstromschutzschalter ausgelöst wird. Das kommt daher, dass beim Stecken die Phasen nicht genau gleichzeitig kontaktiert werden und dann durch die Y-Kondensatoren asymmetrische Ladeströme auftreten, die den vorgeschalteten RCD auslösen lassen. Um dies zu verhindern, weist die Vorrichtung erfindungsgemäβ eine Verzögerungseinrichtung auf, die derart ausgebildet ist, dass der Kompensationsstrom zeitverzögert überlagert wird, d. h., insbesondere erst dann, wenn beim Einstecken der Vorrichtung ans Netz alle Phasen des Steckers kontaktiert sind. Das heißt, dass vorzugsweise das Kondensatornetzwerk erst dann zugeschaltet wird, wenn beim Einstecken der Vorrichtung alle Phasen des Steckers kontaktiert sind. Dabei kann die Verzögerungsschaltung beispielsweise als Schaltrelais, Halbleiterrelais, Zeitrelais oder als Software-Lösung ausgebildet sein, oder aber in Form einer mechanischen Lösung realisiert werden, indem die Stromversorgung für die Kompensationseinrichtung über Steckerkontakte in einem Stecker erfolgt, die beim Zusammenstecken weiter hinter liegen, als die Kontakte für die Stromversorgung der Vorrichtung, sodass die Kontakte der Kompensationseinrichtung erst dann Kontakt haben, nachdem die Leistungskontakte bereits Kontakt haben.

Gemäß der Erfindung ist es auch möglich, dass der Ableitstromkompensator in der Vorrichtung integriert ist und über eine separate Hilfsspannungsversorgung versorgt wird, so dass beim Eischalten der Vorrichtung der Ableitstromkompensator bereits mit Strom versorgt wird bevor im Laststromkreis ein Ableitstrom erzeugt wird. Es ist vorteilhaft und platzsparend, wenn der Ableitstromkompensator in der Maschine integriert ist. Somit ergibt sich kein zusätzlicher Platzbedarf außerhalb der Maschine, wenn der Ableitstromkompensator in der Maschine integriert ist, wäre es möglich, dass der Fehlerstromschutzschalter (RCD) ungewollt auslöst, wenn nach dem Einschalten der Vorrichtung bereits Ableitströme auftreten, der Kompensator aber noch nicht betriebsbereit ist. Um das zu verhindern, wird der Ableitstromkompensator mit der separaten Hilfsspannung versorgt, die anliegt, bevor der Laststromkreis den Ableitstrom erzeugt. Somit kann das System den Strom ausgleichen, bevor der Fehlerstromschutzschalter auslöst. Bei dieser Lösung ist es auch nicht mehr schädlich, wenn die Phasen der Laststromkreise unsymmetrisch zugeschaltet werden. Somit ist kein teurer Schutz mit gleichzeitig schließenden Kontakten erforderlich.

Wie bereits zuvor beschrieben, ermöglicht die vorliegende Erfindung, dass die Vorrichtung aussteckbar und somit bewegbar ist. Umfasst die Vorrichtung das externe Gerät mit dem Ableitstromkompensator weist dieses Gerät einen Netzstecker auf.

Die Vorrichtung ist vorteilhafterweise eine Vorrichtung aus mindestens einer Gruppe: Füllmaschine, Clipper, Abdreheinheit, angetriebene Aufhängeeinheit, Cutter, Trenneinheit, Gruppiereinheit, Transportband, Beschickungsanlage, Verpackungsmschine für Lebensmittelprodukte etc.

Bei dem erfindungsgemäßen Verfahren zur Produktion von Nahrungsmittel, insbesondere mit einer Vorrichtung nach mindestens einem der Ansprüche 1-7 wird beim Betrieb der Vorrichtung ein Ableitstrom, der den Laststromkreis erzeugt wird, erfasst und über einen Ableitstromkompensator ein Kompensationsstrom, der dem Ableitstrom entgegen gerichtet ist, erzeugt. Der Kompensationsstrom wird dem Ableitstrom überlagert, wodurch der Ableitstrom reduziert, insbesondere im Wesentlichen eliminiert wird.

Der Ableitstromkompensator umfasst einen Verstärker und ein Kondensatornetzwerk. Beim Einstecken der Vorrichtung wird vorteilhafterweise der Kompensationsstrom über das Kondensatornetzwerk erst dann zeitverzögert zugeschaltet, wenn beim Einstecken alle Phasen eines Steckers der Vorrichtung kontaktiert sind, d. h., am Netz angeschlossen sind.

Es ist auch möglich, dass die Spannungsversorgung des Ableitstromkompensators über die Spannungsversorgung der Vorrichtung erfolgt, oder aber, dass der Ableitstromkompensator in der Vorrichtung integriert ist und über eine separate Hilfsspannungsversorgung versorgt wird, derart, dass der Kompensationsstrom bereits anliegt, bevor ein Ableitstrom am Laststromkreis erzeugt wird. Somit kann das System den Strom ausgleichen, bevor der Fehlerstromschutzschalter auslöst.

Gemäß der vorliegenden Erfindung kann also nun die Vorrichtung ausgesteckt, d. h., vom Netz über einen Netzstecker getrennt werden, an einen anderen Produktionsort bewegt werden und schließlich neu eingesteckt werden. Dies ermöglicht eine erhöhte Flexibilität bei gleichzeitiger Sicherheit.

Vorteilhafterweise befindet sich der Ableitstromkompensator zwischen einem Fehlerstromschutzschalter und einem EMV-Filter. Wenn der Ableitstromkompensator noch vor dem EMV-Eingangsfilter angeordnet ist, können die gesamten Ableitströme des Laststromkreises kompensiert werden.

Es ist besonders vorteilhaft, wenn die Vorrichtung über ein dreiphasiges Netz mit Spannung versorgt wird und der Strom in den drei Phasen erfasst und durch Differenzbildung der Ableitstrom bestimmt wird, entsprechende Signale einem Verstärker zugeleitet werden, der eine Auswerteeinheit umfasst, um einen Kompensationsstrom zu erzeugen, der über ein Kondensatornetzwerk in mindestens eine, vorzugsweise alle drei Phasen eingespeist wird, wodurch es im Wesentlichen zu einer Eliminierung des Ableitstroms kommt.
- Fig. 1: zeigt grob schematisch eine erfindungsgemäße Vorrichtung mit Ableitstromkompensator;
- Fig. 2: zeigt grob schematisch eine Ausführungsform einer erfindungsgemäßen Vorrichtung mit externen Ableitstromkompensator;
- Fig. 3: zeigt grob schematisch ein Ersatzschaltbild eines Ableitstromkompensators für das in Fig. 2 gezeigte Ausführungsbeispiel;
- Fig. 4: zeigt grob schematisch ein weiteres Ausführungsbeispiel der vorliegenden Erfindung mit integriertem Ableitstromkompensator;

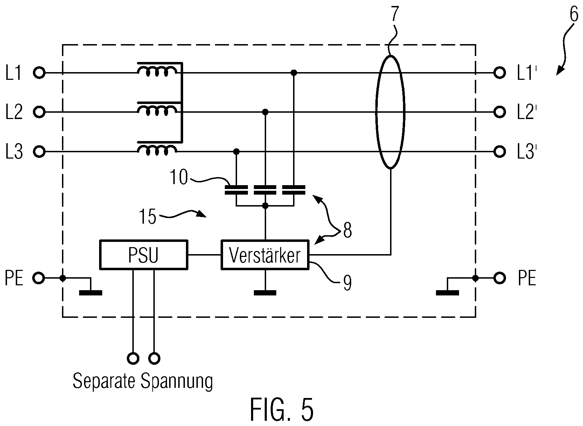

- Fig. 5: zeigt grob schematisch ein Ersatzschaltbild eines Ableitstromkompensators für das in Fig. 4 gezeigte Ausführungsbeispiel;
- Fig. 6: zeigt grob schematisch eine Füllmaschine gemäß der vorliegenden Erfindung;
- Fig.7: zeigt ein weiteres Ausführungsbeispiel gemäß der vorliegenden Erfindung

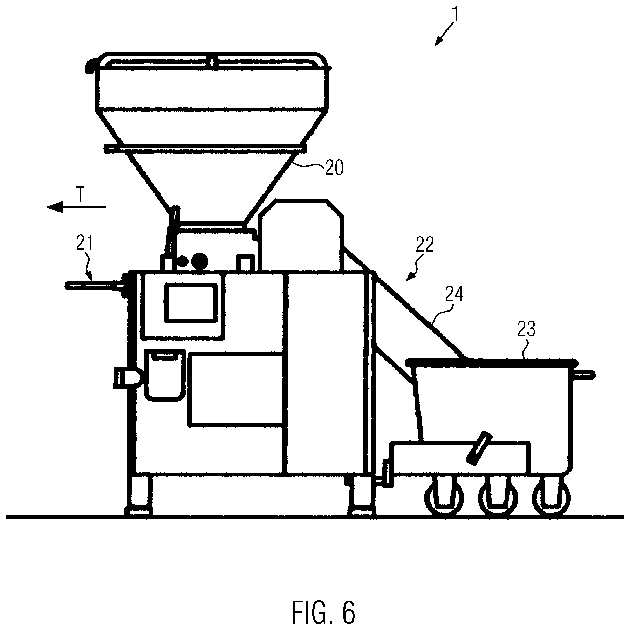

Fig. 6 zeigt grob schematisch eine Vorrichtung 1 zur Produktion von Nahrungsmitteln, hier in Form einer Füllmaschine 1. Die Füllmaschine 1 weist einen Trichter 20 auf, in den pastöse Masse, z. B. Wurstbrät, eingefüllt wird und nach unten in ein nicht dargestelltes Förderwerk, beispielsweise in eine Flügelzellenpumpe gelangt, über die sie in ein Füllrohr 21 beispielsweise in eine nicht dargestellte Wursthülle ausgestoßen wird. Die Vorrichtung kann beispielsweise auch eine Hubvorrichtung 22 aufweisen, die über einen Hubarm 24 einen Brätwagen 23 nach oben hebt und in den Fülltrichter 20 leert. Die Füllmaschine weist dabei, wie noch nachfolgend erläutert wird, einen Motor 2 auf, der beispielsweise das Förderwerk antreibt. Die Füllmaschine kann weiter einen separaten Motor für die Hubeinrichtung 22 aufweisen.

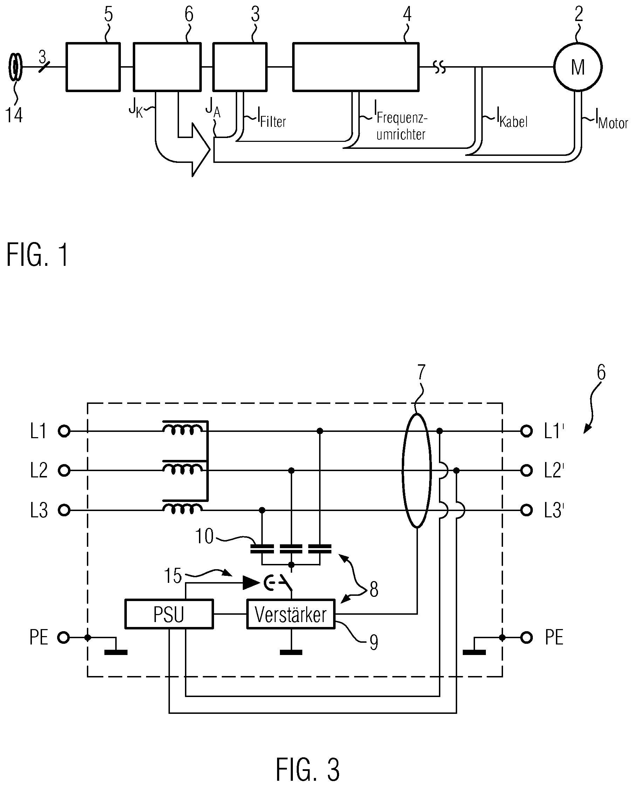

Fig. 1 zeigt grob schematisch einen Laststromkreis für den Motor 2. Fig. 1 zeigt grob schematisch ein Antriebsystem für beispielsweise eine Flügelzellenpumpe, das im Wesentlichen einen EMV-Eingangsfilter 3, einen Frequenzumrichter 4, ein Motorkabel 5 und einen Motor 2 umfasst. Sowohl der EMV-Filter, als auch der Frequenzumrichter 4 und das lange Motorkabel sowie der Motor 2 können Ableitströme erzeugen, die einen Fehlerstromschutzschalter 5 auslösen würden. Gemäß der vorliegenden Erfindung ist ein Ableitstromkompensator 6 vor dem EMV-Filter 3 vorgesehen, der einen Kompensationsstrom I_{K} erzeugt, der dem Ableitstrom I_{A} entgegen gerichtet ist. Somit kann der Ableitstrom kompensiert, d. h. eliminiert, werden, aber zumindest soweit reduziert werden, dass er unterhalb der Schwelle zum Auslösen des RCD-Fehlerstromschutzschalters 5 liegt, beispielsweise unterhalb der Auslöseschwelle von 30 mA für Ströme im Frequenzbereich <100 Hz, bis 300 mA für Ströme mit einer Frequenz >1.000 Hz.

Der Ableitstrom I_{A} ist die Summe aller Einzelableitströme hier, die Summe aus I_{Filter} + I_{Frequenzumrichter} + I_{Kabel} + I_{Motor}. Gemäß der vorliegenden Erfindung soll ein Frequenzbereich zwischen 100 Hz und 300 kHz abgedeckt werden. Der Frequenzbereich von 50 bis 60 Hz darf nicht kompensiert werden, damit der Personenschutz wirksam bleibt. In der Praxis sind Kompensationsströme bis 1 A erforderlich. Der Kompensationsstrom I_{K} ist vorzugsweise in seiner Phase um 180° zum Ableitstrom I_{A} verschoben und weist im Wesentlichen die gleiche Amplitude und vorzugsweise gleiche Frequenz auf.

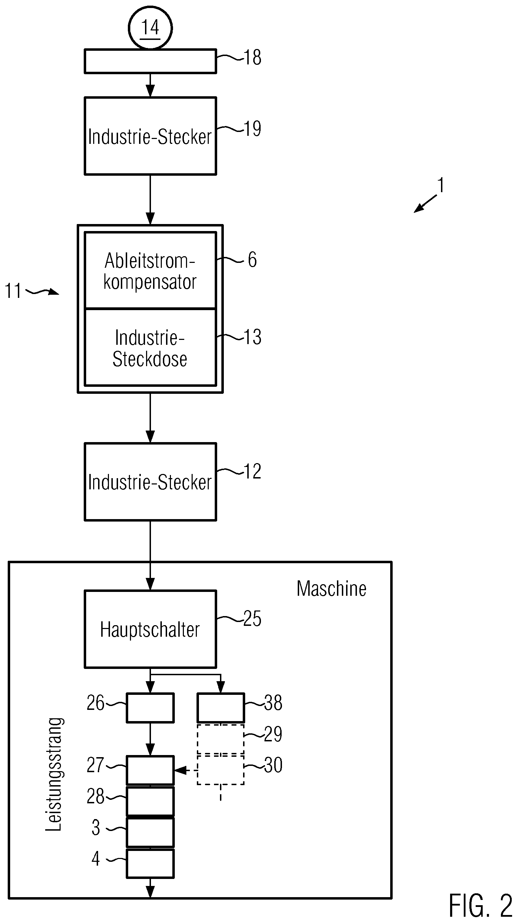

Fig. 2 zeigt eine Ausführungsform gemäß der vorliegenden Erfindung mit einem externen Ableitstromkompensator 6, der außerhalb des Maschinengehäuses angeordnet ist. Fig. 2 zeigt eine Spannungsversorgung 14, beispielsweise ein dreiphasiges Netz, sowie eine Industriesteckdose 18, über die eine Vorrichtung mit einem Netzstecker 19 angesteckt werden kann. Bei diesem Ausführungsbeispiel ist der Ableitstromkompensator 6 in ein vorgeschaltetes Gerät 11 eingebaut, das eine weitere Industriesteckdose 13 aufweist, in die wiederum ein Industriestecker 12 der Vorrichtung 1 eingesteckt werden kann. Der Industriestecker 12 ist über eine entsprechende Leitung mit dem Hauptschalter 25 der Vorrichtung verbunden. Im Anschluss kann ein Motorschutzschalter 26 vorgesehen sein, sowie ein Hauptschütz 27 ohne "symmetrischen Kontakte, d. h. ohne Sprungkontakte. In Folge kann ein Netzdrosselteil 28vorgesehen sein, gefolgt von einem EMV-Filter 3 und einem Frequenzumrichter von dem aus der Motor 2 versorgt werden kann. Nach dem Hauptschalter 25 kann eine Leitung zu einem Trafoschutzschalter 38 abzweigen, der mit einem Steuertrafo 29 verbunden ist und eine Steuerung 30 versorgt. Die Steuerung 30 ist mit dem Hauptschütz verbunden, um den Hauptschütz einzuschalten. Wie aus Fig. 2 hervorgeht, wird der Ableitstromkompensator 6 im gleichen Laststromkreis wie der Motor über die Spannungsversorgung 14 d.h. die Netzspannung mit Strom versorgt. Der Ableitstromkompensator befindet sich also vor dem Hauptschalter 25.

Fig. 3 zeigt ein Ersatzschaltbild des Ableitstromkompensators 6 für das in Fig. 2 gezeigte Ausführungsbeispiel. Fig. 3 zeigt ein Dreiphasennetz. Der Ableitstromkompensator 6 umfasst eine Einrichtung zum Messen eines Ableitstroms 7, sowie eine Einrichtung zum Erzeugen eines Kompensationsstroms 8. Die Einrichtung zum Erzeugen eines Kompensationsstroms 8 umfasst einen Verstärker 9, der mit der Einrichtung zum Messen des Ableitstroms 7 verbunden ist und eine Auswerteeinheit umfasst, die auf der Grundlage der Messwerte einen Ableitstrom I_{A} und einen Kompensationsstrom I_{K} bestimmen kann. Dabei kann beispielsweise die Einrichtung zum Erfassen eines Ableitstroms 7 eine Messzange umfassen. Es können die Ströme der drei Phasen erfasst werden und aus den entsprechenden Differenzen der Ableitstrom. Das bedeutet, wenn die Summe der Ströme in den drei Phasen L1, L2, L3 nicht 0 ist, dass es einen Ableitstrom I_{A} gibt. Der Kompensationsstrom I_{K} wird z.B. derart berechnet, dass er in seiner Phase um 180° zum Ableitstrom I_{A} verschoben ist und im Wesentlichen die gleiche Amplitude wie der Ableitstrom aufweist. Fig. 3 zeigt in vereinfachter Darstellung, dass der Verstärker 9 auf der Grundlage des ermittelten Kompensationsstroms I_{K} den Kompensationsstrom auf die drei Phasen einspeist, derart, dass die Summe der Ströme der einzelnen Phasen L1, L2, L3 z.B. wieder 0 ergibt und somit der Ableitstrom kompensiert wird, zumindest jedoch unter einer Auslöseschwelle des RCD-Schalters liegt.

Dabei kann beispielsweise der jeweilige Strom I_{L1}, I_{L2}, I_{L3}, gemessen werden.

Durch Differenzbildung kann dabei z.B. ein Ableitstrom und ein entgegengesetzter Kompensationsstrom ermittelt werden, der dann auf die drei Phasen L1, L2, L3 aufgeteilt wird.

Es ist aber auch möglich, für jede Phase einen eigenen Ableitstrom zu bestimmen durch Messung der Ströme in jeder einzelnen Phase und dann entsprechende Kompensationsströme für die einzelnen Phasen zu ermitteln und jeder Phase entsprechend zuzuführen.

Bei diesem Ausführungsbeispiel wird der Ableitstromkompensator, wie auch bereits erläutert, über die Spannungsversorgung 14, hier über zwei der Phasen des Dreiphasensystems mit Spannung versorgt.

Die Vorrichtung umfasst vorteilhafterweise eine Verzögerungseinrichtung 15. Die Verzögerungseinrichtung 15 ist derart ausgebildet, dass der Kompensationsstrom I_{K} zeitverzögert, insbesondere erst, wenn beim Einstecken der Vorrichtung alle Phasen des Steckers 19 kontaktiert sind, überlagert wird. Das heißt, dass das Kondensatornetzwerk 10 erst dann zugeschaltet wird, wenn beim Einstecken der Vorrichtung alle Phasen des Steckers kontaktiert sind. Somit kann verhindert werden, dass bereits beim Einstecken der Vorrichtung 1 der RCD auslösen kann. Das Problem rührt daher, dass beim Einstecken die Phasen L1, L2, L3 nicht genau gleichzeitig kontaktiert werden und dann durch die Y-Kondensatoren des Kondensatornetzwerkes 10 asymmetrische Ladeströme auftreten, die den vorgeschalteten RCD 5 auslösen können. Durch die Verzögerungsschaltung 15 kann dies verhindert werden. Die Verzögerungsschaltung 15 kann beispielsweise als Zeitrelais, Halbleiterrelais, Zeitrelais, oder aber als Software-Lösung realisiert werden. Weiter besteht auch die Möglichkeit einer mechanischen Verzögerungseinrichtung 15, derart, dass der Ableitstromkompensator 6 zeitverzögert mit Spannung versorgt wird, indem beispielsweise der Stecker 19 derart ausgebildet ist, dass die Kontakte, die den Ableitstromkompensator 6 mit Spannung versorgen, beim Zusammenstecken weiter hinten sitzen, sodass sie erst Kontakt haben, nachdem die Leistungskontakte bereits Kontakt haben. Dies kann beispielsweise durch kürzere Pins realisiert werden.

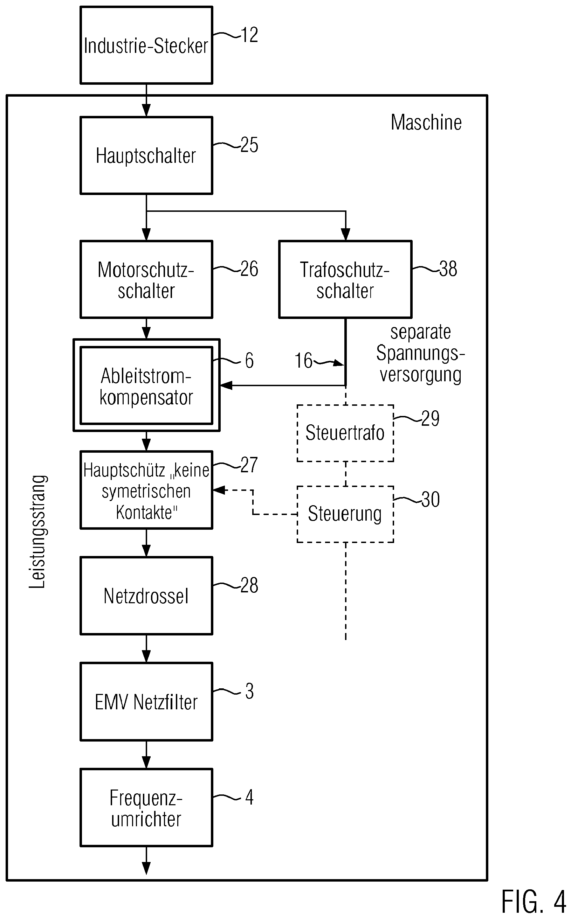

Fig. 4 zeigt eine weitere Ausführungsform gemäß der vorliegenden Erfindung. Hier wird der Ableitstromkompensator 6 direkt in die Vorrichtung eingebaut, d. h. integriert. Wie zu erkennen ist, befindet sich der Ableitstromkompensator 6 zwischen Industriestecker 12 und EMV-Netzfilter 3. Um auch hier zu verhindern, dass der RCD-Fehlerstromschutzschalter ungewollt auslöst, wird der Ableitstromkompensator 6 mit einer separaten Hilfsspannung 16 versorgt und nicht wie beim ersten Ausführungsbeispiel über die Netzspannung 14. Hier können unterschiedliche separate Hilfsspannungsversorgungen 16 verwendet werden. Bei dem in Fig. 4 gezeigten Ausführungsbeispiel wird z. B. nach dem Hauptschalter Strom zu einem Trafoschutzschalter abgezweigt und dem Ableitstromkompensator 6 zugeführt. Dies verhindert das Problem, dass der RCD ungewollt auslöst, wenn nach dem Einschalten der Maschine bereits Ableitströme auftreten, der Kompensator aber noch nicht betriebsbereit ist. Um das zu verhindern, wird der Kompensator mit einer separaten Hilfsspannung versorgt, die anliegt, bevor die Laststromkreise, die Ableitstrom erzeugen, zugeschaltet werden. Somit kann das System den Ableitstrom I_{A} ausgleichen, bevor der RCD-Fehlerstromschutzschalter auslöst. Bei dieser Lösung ist es auch nicht mehr schädlich, wenn die Phasen der Laststromkreise unsymmetrisch zugeschaltet werden. Somit ist kein teurer Schutz mit gleichzeitig schließenden Kontakten erforderlich.

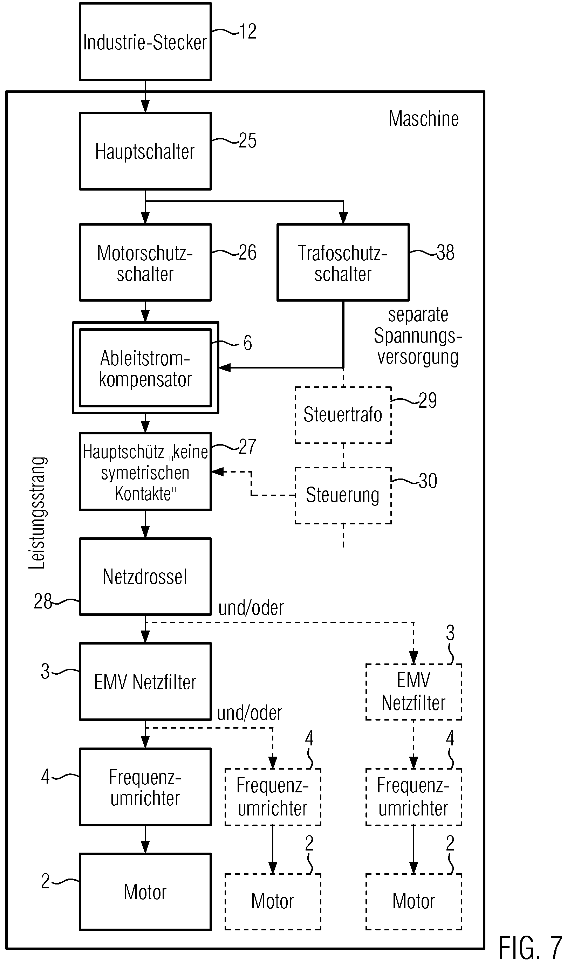

Fig. 7 zeigt ein weiteres Ausführungsbeispiel gemäß der vorliegenden Erfindung. Dabei entspricht das in Fig. 7 gezeigte Ausführungsbeispiel dem in Fig. 4 gezeigten Ausführungsbeispiel. Bei diesem Ausführungsbeispiel gibt es in der Vorrichtung mehrere Motoren. Das heißt, es sind in einer Füllmaschine zusätzlich zu einem Motor für die Flügelzellenpumpe noch ein Motor für eine andere Funktionseinheit, zum Beispiel für eine Hubeinrichtung und/oder Abdreheinrichtung vorgesehen sind. Dabei kann beispielsweise gemäß einer ersten Alternative nach dem EMV-Netzfilter ein weiterer Frequenzumrichter für den weiteren Motor 2 vorgesehen sein und/oder nach der Netzdrossel ein weiterer EMV-Netzfilter und ein weiterer Frequenzumrichter für einen weiteren Motor vorgesehen sein. Somit können auch diese Laststromkreise, d.h. mehrere Motoren über nur einen Ableitstromkompensator 6 abgesichert werden.

### Bezugszeichenliste

- 1: Vorrichtung
- 2: Motor
- 3: EMV-Filter
- 4: Frequenzumrichter
- 5: RCD-Schutzschalter
- 6: Ableitstromkompensator
- 7: Einrichtung zum Messen eines Ableitstrom
- 8: Einrichtung zum Erzeugen eines Kompensationsstroms
- 9: Verstärker
- 10: Kondensatornetzwerk
- 11: Vorgeschaltetes Gerät
- 12: Stecker
- 13: Steckdose
- 14: Spannungsversorgung
- 15: Verzögerungseinrichtung
- 16: Separate Spannungsversorgung

## Patentansprüche

1. Vorrichtung (1) zur Produktion von Nahrungsmitteln, insbesondere Füllmaschine zur Wurstherstellung mit einem Laststromkreis, der einen Ableitstrom erzeugt und mit
einem EMV-Filter (3), einem Frequenzumrichter (4), einem Motorkabel und einem Motor (2),
**umfassend** einen Ableitstromkompensator (6) mit
einer Einrichtung zum Erfassen des Ableitstroms (7) sowie mit
einer Einrichtung zum Erzeugen (8) eines Kompensationsstroms, der dem Ableitstrom entgegen gerichtet ist und mit dem Ableitstrom überlagert wird derart, dass der Ableitstrom reduziert, insbesondere im Wesentlichen eliminiert wird, wobei entweder
der Ableitstromkompensator (6) in einem der Vorrichtung vorgeschalteten Gerät (11) eingebaut ist, die Spannungsversorgung des Ableitstromkompensators (6) über die Spannungsversorgung (14) der Vorrichtung erfolgt und die Vorrichtung eine Verzögerungseinrichtung (15) aufweist, die derart ausgebildet ist, dass der Kompensationsstrom zeitverzögert, insbesondere erst, wenn beim Einstecken der Vorrichtung alle Phasen des Steckers (12) kontaktiert sind, überlagert wird
oder
der Ableitstromkompensator (6) in der Vorrichtung integriert ist und über eine separate Hilfsspannungsversorgung (16) versorgt wird und dass die Vorrichtung aussteckbar und insbesondere bewegbar ist.

2. Vorrichtung nach Anspruch 1, **dadurch gekennzeichnet, dass** der Kompensationsstrom in seiner Phase zum Ableitstrom um 180° verschoben ist und im Wesentlichen die gleiche Amplitude aufweist.

3. Vorrichtung nach Anspruch 1 oder 2, **dadurch gekennzeichnet, dass** die Einrichtung zum Erzeugen eines Kompensationsstroms (8) einen Verstärker (9) sowie ein Kondensatornetzwerk (10) umfasst, über das der Kompensationsstrom einzelnen Phasen eines Mehrphasensystems, insbesondere mindestens einer der drei Phasen eines Dreiphasensystems, zugeführt werden kann.

4. Vorrichtung nach mindestens einem der Ansprüche 1-3, **dadurch gekennzeichnet, dass** der Ableitstromkompensator (6) zwischen einem Fehlerstromschutzschalter (5) und dem EMV-Filter (3) angeordnet ist.

5. Vorrichtung nach mindestens einem der Ansprüche 1-4, **dadurch gekennzeichnet, dass** die Vorrichtung einen Stecker (12) aufweist, der über eine Steckdose (13) mit dem Ableitstromkompensator (6) verbindbar ist.

6. Vorrichtung nach Anspruch 3, **dadurch gekennzeichnet, dass** die Vorrichtung vorzugsweise derart ausgebildet ist, dass das Kondensatornetzwerk (10) erst dann zugeschaltet wird, wenn beim Einstecken der Vorrichtung alle Phasen des Steckers (12) kontaktiert sind.

7. Vorrichtung nach mindestens einem der vorhergehenden Ansprüche, **dadurch gekennzeichnet, dass** die Vorrichtung mindestens eine Vorrichtung aus folgender Gruppe ist: Füllmaschine, Clipper, Abdreheinheit, angetriebene Aufhängeeinheit, Cutter, Trenneinheit, Gruppiereinheit, Transportband, Beschickungsanlage, Verpackungsmaschine für Lebensmittelprodukte.

8. Verfahren zur Produktion von Nahrungsmitteln mit einer Vorrichtung nach mindestens einem der Ansprüche 1-7, wobei beim Betrieb der Vorrichtung ein Ableitstrom erfasst wird und über einen Ableitstromkompensator (6) ein Kompensationsstrom, der dem Ableitstrom entgegen gerichtet ist erzeugt und dem Ableitstrom überlagert wird, wodurch der Ableitstrom reduziert, insbesondere im Wesentlichen eliminiert wird, wobei entweder
der Ableitstromkompensator (6) in einem der Vorrichtung vorgeschalteten Gerät (11) eingebaut ist, die Spannungsversorgung des Ableitstromkompensators (6) über die Spannungsversorgung (14) der Vorrichtung erfolgt und
die Vorrichtung eine Verzögerungseinrichtung (15) aufweist, die derart ausgebildet ist, dass der Kompensationsstrom zeitverzögert, insbesondere erst, wenn beim Einstecken der Vorrichtung alle Phasen des Steckers (12) kontaktiert sind, überlagert wird
oder
dass der Ableitstromkompensator (6) in der Vorrichtung integriert ist und über eine separate Hilfsspannungsversorgung (16) versorgt wird und dass die Vorrichtung aussteckbar und insbesondere bewegbar ist.

9. Verfahren nach Anspruch 8, **dadurch gekennzeichnet, dass** der Ableitstromkompensator (6) einen Verstärker (9) sowie ein Kondensatornetzwerk (10) umfasst, und beim Einstecken der Vorrichtung der Kompensationsstrom über das Kondensatornetzwerk (10) erst dann zeitverzögert zugeschaltet wird, wenn beim Einstecken alle Phasen eines Steckers der Vorrichtung kontaktiert sind.

10. Verfahren nach mindestens einem der Ansprüche 8-9, **dadurch gekennzeichnet, dass** die Vorrichtung ausgesteckt, an einen anderen Produktionsort bewegt und erneut eingesteckt wird.

11. Verfahren nach mindestens einem der Ansprüche 8-10, **dadurch gekennzeichnet, dass** der Ableitstromkompensator (6) zwischen einem Fehlerstromschutzschalter und einem EMV-Filter (3) angeordnet ist.

12. Verfahren nach mindestens einem der Ansprüche 8-11, **dadurch gekennzeichnet, dass** die Vorrichtung über ein dreiphasiges Netz mit Spannung versorgt wird und der Strom in den drei Phasen erfasst und entsprechende Signale einem Verstärker zugeleitet werden, der eine Auswerteeinheit umfasst um durch Differenzbildung den jeweiligen Ableitstrom zu bestimmen und einen Kompensationsstrom zu erzeugen, der über ein Kondensatornetzwerk in mindestens eine, vorzugsweise alle drei Phasen eingespeist wird.

## Claims

1. Apparatus (1) for the production of foods, in particular, a stuffing machine for the production of sausages with a load circuit that generates a leakage current and with
an EMC filter (3), a frequency converter (4), a motor cable and a motor (2),
**comprising**
a leakage current compensator (6) with
a device for detecting said leakage current (7) and with
a device for generating (8) a compensation current that is directed opposite to said leakage current and is superimposed with said leakage current, such that said leakage current is reduced, is in particular substantially eliminated, wherein
either
said leakage current compensator (6) is installed in a device (11) upstream of said apparatus, the power supply of said leakage current compensators (6) is effected via the power supply (14) of said apparatus and said apparatus comprises a delay device (15) which is configured such that said compensation current is superimposed in a time-delayed manner, in particular only when all phases of said plug (12) have contacted when said apparatus is plugged in
or
that said leakage current compensator (6) is integrated into said apparatus and is supplied via a separate auxiliary power supply (16) and that said apparatus can be unplugged and is, in particular, movable .

2. Apparatus according to claim 1, **characterized in that** said compensation current is shifted in its phase relative to said leakage current by 180° and have substantially the same amplitude.

3. Apparatus according to claim 1 or 2, **characterized in that** said device for generating a compensation current (8) comprises an amplifier (9) and a capacitor network (10) via which said compensation current can be supplied to individual phases of a multi-phase system, in particular to at least one of the three phases a three-phase system.

4. Apparatus according to at least one of the claims 1-3, **characterized in that** said leakage current compensator (6) is arranged between a ground fault interrupter (5) and said EMC filter (3).

5. Apparatus according to at least one of the claims 1-4, **characterized in that** said apparatus comprises a plug (12) which can be connected to said leakage current compensator (6) by way of an outlet (13).

6. Apparatus according to claim 3, **characterized in that** the apparatus is preferably configured such that said capacitor network (10) is switched on only when all phases of said plug (12) have contacted when said apparatus is plugged in.

7. Apparatus according to at least one of the preceding claims, **characterized in that** said apparatus is at least one apparatus from the following group: stuffing machine, clipper, spooling unit, driven suspension unit, cutter, separation unit, grouping unit, conveyor belt, charging system, packaging machine for food products.

8. Method for the production of foods, with an apparatus according to at least one of the claims 1-7, **wherein** a leakage current is detected during the operation of said apparatus and a compensation current directed opposite to said leakage current is generated using a leakage current compensator (6) and superimposed onto said leakage current, whereby said leakage current is reduced, in particular, substantially eliminated, wherein
either
said leakage current compensator (6) is installed in a device (11) upstream of said apparatus, the power supply of said leakage current compensators (6) is effected via the power supply (14) of said apparatus and
said apparatus comprises a delay device (15) which is configured such that said compensation current is superimposed in a time-delayed manner, in particular only when all phases of said plug (12) have contacted when said apparatus is plugged in
or
that said leakage current compensator (6) is integrated into said apparatus and is supplied via a separate auxiliary power supply (16) and that said apparatus can be unplugged and is, in particular, movable .

9. Method according to claim 8, **characterized in that** said leakage current compensator (6) comprises an amplifier (9) as well as a capacitor network (10) and that said compensation current is switched on via said capacitor network (10) in a time-delayed manner, when said apparatus is plugged in, only when all phases of a plug of said apparatus have contacted when plugged in.

10. Method according to at least one of the claims 8 - 9, **characterized in that** said apparatus is unplugged, moved to another production location and plugged in again.

11. Method according to at least one of the claims 8 -10 , **characterized in that** said leakage current compensator (6) is arranged between a ground fault interrupter and said EMC filter (3).

12. Method according to at least one of the claims 8 - 11, **characterized in that** said apparatus is supplied with voltage via a three-phase mains and the current in the three phases is detected and corresponding signals are fed to an amplifier comprising an evaluation unit for determining a respective leakage current by subtraction and for generating a compensation current which is fed via a capacitor network to at least one, preferably all three phases.

## Revendications

1. Dispositif (1) pour la fabrication de denrées alimentaires, en particulier machine de remplissage pour la fabrication de saucisses avec un circuit de charge qui génère un courant de fuite, avec un filtre CEM (3), un convertisseur de fréquence (4), un câble de moteur et un moteur (2), comprenant
un compensateur de courant de fuite (6) avec un dispositif de détection du courant de fuite (7) et avec un dispositif de génération (8) d'un courant de compensation qui est dirigé à l'encontre du courant de fuite et qui est superposé au courant de fuite de telle sorte que le courant de fuite est réduit, en particulier sensiblement supprimé,
dans lequel soit le compensateur de courant de fuite (6) est installé dans un appareil (11) branché en amont du dispositif, l'alimentation en tension du compensateur de courant de fuite (6) survenant par l'intermédiaire de l'alimentation en tension (14) du dispositif, et le dispositif comprenant un dispositif de temporisation (15) qui est conçu de telle sorte que le courant de compensation est temporisé, en particulier superposé seulement lorsque toutes les phases de la fiche (12) sont mises en contact lorsque le dispositif est branché, soit
le compensateur de courant de fuite (6) est intégré dans le dispositif et est alimenté par l'intermédiaire d'une alimentation en tension auxiliaire séparée (16), et de telle sorte que le dispositif peut en particulier être déconnecté et déplacé.

2. Dispositif selon la revendication 1, **caractérisé en ce que** la phase du courant de compensation est décalée de 180° par rapport au courant de fuite et a sensiblement la même amplitude.

3. Dispositif selon la revendication 1 ou 2, **caractérisé en ce que** le dispositif de génération de courant de compensation (8) comprend un amplificateur (9) et un réseau de condensateurs (10), par l'intermédiaire desquels le courant de compensation peut être amené à des phases individuelles d'un système à plusieurs phases, en particulier à au moins l'une des trois phases d'un système à trois phases.

4. Dispositif selon au moins l'une des revendications 1 à 3, **caractérisé en ce que** le compensateur de courant de fuite (6) est agencé entre un disjoncteur à courant de défaut (5) et le filtre CEM (3).

5. Dispositif selon au moins l'une des revendications 1 à 4, **caractérisé en ce que** le dispositif présente une fiche (12) qui peut être reliée au compensateur de courant de fuite (6) par l'intermédiaire d'une douille (13).

6. Dispositif selon la revendication 3, **caractérisé en ce que** le dispositif est réalisé de préférence de telle sorte que le réseau de condensateurs (10) n'est pas mis en circuit tant que toutes les phases de la fiche (12) ne sont pas mises en contact lors de l'enfichage du dispositif.

7. Dispositif selon au moins l'une des revendications précédentes, **caractérisé en ce que** le dispositif est au moins un dispositif du groupe suivant :
machine de remplissage, massicot, unité de torsion, unité de suspension entraînée, dispositif de coupe, unité de séparation, unité de regroupement, bande transporteuse, système de chargement, machine d'emballage de produits alimentaires.

8. Procédé de fabrication de denrées alimentaires, comprenant un dispositif selon au moins l'une quelconque des revendications 1 à 7, dans lequel un courant de fuite est détecté pendant le fonctionnement du dispositif et un courant de compensation dirigé à l'encontre du courant de fuite est généré par l'intermédiaire d'un compensateur de courant de fuite (6) et est superposé au courant de fuite, ce qui a pour effet de réduire le courant de fuite, en particulier de l'éliminer sensiblement, dans lequel soit le compensateur de courant de fuite (6) est installé dans un appareil (11) branché en amont du dispositif, l'alimentation en tension du compensateur de courant de fuite (6) survenant par l'intermédiaire de l'alimentation en tension (14) du dispositif, et le dispositif comprenant un dispositif de temporisation (15) qui est conçu de telle sorte que le courant de compensation est temporisé, en particulier superposé seulement lorsque toutes les phases de la fiche (12) sont mises en contact lorsque le dispositif est branché, soit le compensateur de courant de fuite (6) est intégré dans le dispositif et est alimenté par l'intermédiaire d'une alimentation en tension auxiliaire séparée (16), et de telle sorte que le dispositif peut en particulier être déconnecté et déplacé.

9. Procédé selon la revendication 8, **caractérisé en ce que** le compensateur de courant de fuite (6) comprend un amplificateur (9) et un réseau de condensateurs (10) et, lorsque le dispositif est branché, le courant de compensation est branché avec un retard par l'intermédiaire du réseau de condensateurs (10) que lorsque toutes les phases d'une fiche du dispositif sont mises en contact lors du branchement.

10. Procédé selon au moins l'une quelconque des revendications 8 à 9, **caractérisé en ce que** le dispositif est débranché, déplacé vers un autre lieu de production et branché à nouveau.

11. Procédé selon au moins l'une des revendications 8 à 10, **caractérisé en ce que** le compensateur de courant de fuite (6) est disposé entre un disjoncteur à courant de défaut et un filtre CEM (3).

12. Procédé selon au moins l'une des revendications 8 à 11, **caractérisé en ce que** le dispositif est alimenté en tension via un réseau triphasé et le courant est détecté dans les trois phases et des signaux correspondants sont transmis à un amplificateur qui comprend une unité d'évaluation afin de calculer le courant dérivé respectif pour déterminer et générer un courant de compensation qui est alimenté dans au moins une, de préférence les trois phases via un réseau de condensateurs.
